# EUROPEAN PATENT APPLICATION

(11) **EP 4 756 639 A1**
(43) Date of publication of application: **10.06.2026**
(21) Application number: 24857944.3
(22) Date of filing: 12.06.2024
(51) Int. Cl.: G06F 16/2458

(54) **DATA AGGREGATION PROCESSING METHOD, SYSTEM AND DEVICE**

(30) Priority: 01.09.2023 CN 202311125364; 29.12.2023 CN 202311863788
(71) Applicant: Huawei Cloud Computing Technologies Co., Ltd., Gui'an New District, Guizhou 550025 (CN)
(72) Inventor: LI, Weiqi, Guiyang, Guizhou 550025 (CN); HUANG, Feiteng, Guiyang, Guizhou 550025 (CN); LIU, Chao, Guiyang, Guizhou 550025 (CN)
(74) Representative: MERH-IP Matias Erny Reichl Hoffmann Patentanwälte PartG mbB
(86) International application number: PCT/CN2024/098756
(87) International publication number: WO 2025/044399

(57) **Abstract**

Embodiments of this disclosure provide a data aggregation processing method, a system, and a device, relating to the field of database technologies. In embodiments of this disclosure, data aggregation processing is performed by a distributed database system, and both data storage and data aggregation processing are performed by a distributed database, with no need to set up an additional processing system for data aggregation processing. Therefore, data does not need to be replicated and separately sent to the distributed database system and the additionally set up processing system. This can reduce occupation of transmission resources.

## Description

This disclosure claims priorities to Chinese Patent Application No. 202311125364.8, filed on September 1, 2023 and entitled "DATA PROCESSING METHOD, APPARATUS, AND COMPUTING DEVICE CLUSTER", and to Chinese Patent Application No. 202311863788.4, filed on December 19, 2023 and entitled "DATA AGGREGATION PROCESSING METHOD, SYSTEM, AND DEVICE", both of which are incorporated herein by reference in their entireties.

### TECHNICAL FIELD

This disclosure relates to the field of database technologies, and in particular, to a data aggregation processing method, a system, and a device.

### BACKGROUND

With rapid development of technologies such as the internet and the internet of things, massive "time-series data" needs to be stored in many services. For example, the "time-series data" may be temperature data periodically collected by temperature sensors, or may be browsing records of users. A distributed database system may store massive time-series data. In actual application, aggregation processing often needs to be performed on the time-series data. The aggregation processing means to perform specified calculation (for example, summation) on time-series data (for example, time-series data belonging to a same time period) that meets a specific condition.

In related technologies, an additional processing system is set up outside the distributed database system to perform aggregation processing. A management platform may separately send time-series data to the distributed database system and the processing system. The distributed database system stores the time-series data in conventional ways, and the processing system performs aggregation processing on the time-series data.

In the foregoing technology, a same piece of data needs to be replicated and sent to a plurality of entities for processing, causing a waste of excessive transmission resources.

### SUMMARY

This disclosure provides a data aggregation processing method, a system, and a device, so that a waste of transmission resources can be reduced.

According to a first aspect, a data aggregation processing method is provided, applied to a distributed database system, where the distributed database system includes a coordinator node and a plurality of storage nodes. A processing process of the method may include: The coordinator node receives an aggregation instruction for an original data table; then the coordinator node may obtain a first shard key of an aggregated data table corresponding to the original data table, where the aggregated data table is used to record data obtained by performing aggregation processing on data in the original data table, and the first shard key includes at least one first attribute tag of the aggregated data table; further, the coordinator node may determine first allocation information, where the first allocation information indicates storage nodes respectively allocated to a plurality of first attribute value sets corresponding to the first shard key, and the first attribute value set includes an attribute value of each first attribute tag; the coordinator node compares the first attribute value set in the first allocation information with an attribute value in a data unit corresponding to the original data table, to distribute the data unit corresponding to the original data table to a corresponding storage node; and the storage node performs aggregation processing based on the received data unit.

The data unit corresponding to the original data table may be a data unit that is of the original data table and that is directly received by the coordinator node, or may be a data unit obtained by performing some processing (for example, processing of deleting a part of fields and aggregation processing) on the received data unit of the original data table by the coordinator node.

In this way, data aggregation processing is performed by the distributed database system, both data storage and data aggregation processing are completed by a distributed database, and no additional processing system needs to be set up to perform data aggregation processing. Therefore, data does not need to be replicated and separately sent to the distributed database system and the additionally set up processing system. In this manner, occupation of transmission resources can be reduced.

In a possible implementation, the first shard key is the same as a second shard key of the original data table, and the second shard key includes at least one second attribute tag of the original data table. In this case, the coordinator node may determine the first allocation information based on second allocation information of the original data table. The second allocation information indicates storage nodes respectively allocated to a plurality of second attribute value sets corresponding to the second shard key, the storage node indicated by the second allocation information is configured to perform disk flushing processing, the second attribute value set is composed of one attribute value of each second attribute tag, and in the first allocation information and the second allocation information, storage nodes corresponding to a same attribute value set are the same.

In this way, the second allocation information used for disk flushing is directly reused as the first allocation information used for aggregation, so that processing can be simplified, efficiency can be improved, and occupation of processing resources can be reduced.

In a possible implementation, the first shard key is different from a second shard key and is a subset of the second shard key, and the second shard key includes at least one second attribute tag of the original data table. In this case, the coordinator node may determine the plurality of first attribute value sets corresponding to the first shard key and a plurality of second attribute value sets corresponding to the second shard key, and then determine the first allocation information based on the plurality of first attribute value sets and the plurality of second attribute value sets. The second attribute value set is composed of one attribute value of each second attribute tag.

In a possible implementation, for each first attribute value set, the coordinator node may determine at least one second attribute value set including the first attribute value set, and select, from storage nodes corresponding to the at least one second attribute value set, one storage node as a storage node corresponding to the first attribute value set; and the coordinator node may determine the first allocation information based on the storage node corresponding to each first attribute value set.

In this way, when the first shard key is the subset of the second shard key, data on which disk flushing needs to be performed in the storage node may be used as much as possible for aggregation, to reduce additional data sending and improve network resource utilization.

In a possible implementation, the coordinator node may determine the first allocation information according to a storage node selection rule. The storage node selection rule may include random selection, selection in a specified order, selection based on resource occupancy, or the like.

This manner of determining the first allocation information may be executed in any case, and the first shard key and the second shard key may not meet any relationship.

In this way, more flexibility is provided when the storage node used for aggregation processing is allocated.

In a possible implementation, the first shard key is different from a second shard key and is not a subset of the second shard key. In this case, the coordinator node may determine the first allocation information according to the foregoing storage node selection rule.

In this way, when the first shard key is the same as the second shard key, and when the first shard key is the subset of the second shard key, the foregoing processing manner that saves more resources may be selected. When the first shard key is different from the second shard key and is not the subset of the second shard key, this more universal and flexible processing manner may be used.

In a possible implementation, the first shard key is determined according to the aggregation instruction. Alternatively, the first shard key may be obtained in another manner. For example, configuration information carrying the first shard key may be manually stored in the coordinator node, and the first shard key may be obtained from the configuration information. For another example, the first shard key may be set by using a shard key creation instruction, in other words, the first shard key is obtained from the shard key creation instruction.

The first shard key is set by using the aggregation instruction, and an aggregation task and a shard key may be set by using only one aggregation instruction. This helps improve operation efficiency.

In a possible implementation, processing of distributing the data unit may be as follows: The coordinator node may separately compare the first attribute value set in the first allocation information and the second attribute value set in the second allocation information with the attribute value in the data unit corresponding to the original data table, to add an aggregation mark and/or a write mark to the data unit corresponding to the original data table, and distribute the data unit to the corresponding storage node.

The aggregation mark indicates the storage node to perform aggregation processing on the data unit, and the write mark indicates the storage node to perform disk flushing processing on the data unit.

In this way, by using the aggregation mark and the write mark, the storage node can well distinguish which data unit needs flushing processing, which data unit needs aggregation processing, and which data unit needs both aggregation processing and flushing processing, to improve processing efficiency of the storage node.

In a possible implementation, processing of distributing the data unit may be as follows: The coordinator node may determine, in the first allocation information, a first attribute value set that matches an attribute value of a received first data unit of the original data table and a corresponding first storage node, and may determine, in the second allocation information, a second attribute value set that matches the attribute value of the received first data unit of the original data table and a corresponding second storage node; and when the first storage node and the second storage node are a same storage node, the coordinator node may add the aggregation mark and the write mark to the first data unit, and send the first data unit to the first storage node; or when the first storage node and the second storage node are not a same storage node, the coordinator node may replicate the first data unit to obtain a second data unit, perform aggregation processing on the first data unit and another data unit that matches the first attribute value set, add the aggregation mark to a data unit obtained through the aggregation processing and send the data unit to the first storage node, and add the write mark to the second data unit and send the second data unit to the second storage node.

In this way, first-level aggregation may be performed on the coordinator node, and then second-level aggregation may be performed on the storage node. In some application scenarios in which pressure of the coordinator node is low, processing resources of the coordinator node can be well used, and processing load of the storage node can be reduced.

In a possible implementation, processing of distributing the data unit may be as follows: The coordinator node may determine, in the first allocation information, a first attribute value set that matches an attribute value of a received first data unit of the original data table and a corresponding first storage node, and may determine, in the second allocation information, a second attribute value set that matches the attribute value of the received first data unit of the original data table and a corresponding second storage node; and when the first storage node and the second storage node are a same storage node, the coordinator node may add the aggregation mark and the write mark to the first data unit, and send the first data unit to the first storage node; or when the first storage node and the second storage node are not a same storage node, the coordinator node may replicate the first data unit to obtain a second data unit, add the aggregation mark to the first data unit and send the first data unit to the first storage node, and add the write mark to the second data unit and send the second data unit to the second storage node.

In this way, the coordinator node only performs distribution work, and does not participate in aggregation processing. In some application scenarios in which pressure of the coordinator node is high, frame freezing or even breakdown of the coordinator node can be prevented.

In a possible implementation, the storage node may apply to a first buffer pool for a first temporary buffer, and write the received data unit into the first temporary buffer; then, the storage node may write the data unit in the first temporary buffer into a storage disk; further, the storage node may apply to a second buffer pool for a second temporary buffer that has a same space size as the first temporary buffer, and release the second temporary buffer to the first buffer pool; then, the storage node performs aggregation processing based on the data unit in the first temporary buffer; and the storage node releases the first temporary buffer to the second buffer pool.

In this way, the second temporary buffer is used to supplement the first buffer pool, so that memory leakage of the first buffer pool can be prevented.

According to a second aspect, a distributed database system is provided. The distributed database system includes a coordinator node and a plurality of storage nodes, and the coordinator node and the plurality of storage nodes are configured to perform the method provided in the first aspect and the possible implementations of the first aspect.

According to a third aspect, a data aggregation processing apparatus is provided. The apparatus includes at least one module, and the at least one module is configured to implement the method provided in the first aspect and the possible implementations of the first aspect.

According to a fourth aspect, a computing device cluster is provided, including at least one compute device. Each compute device includes a processor and a storage. The processor of the at least one compute device is configured to execute instructions stored in the storage of the at least one compute device, to cause the computing device cluster to perform the method provided in the first aspect and the possible implementations of the first aspect.

According to a fifth aspect, a computer device is provided. The computer device includes a storage and a processor, and the storage is configured to store computer instructions. The processor executes the computer instructions stored in the storage, to cause the computer device to perform the method provided in the first aspect and the possible implementations of the first aspect.

According to a sixth aspect, a computer-readable storage medium is provided. The computer-readable storage medium stores computer program code, and when the computer program code is executed by a computer device, the computer device performs the method provided in the first aspect and the possible implementations of the first aspect.

According to a seventh aspect, a computer program product including instructions is provided. When the instructions are run by a computing device cluster, the computing device cluster is caused to perform the method provided in the first aspect and the possible implementations of the first aspect.

### BRIEF DESCRIPTION OF DRAWINGS

FIG. 1 is a diagram of a structure of a distributed database system according to an embodiment of this disclosure;
FIG. 2 is a flowchart of a data aggregation processing method according to an embodiment of this disclosure;
FIG. 3 is a diagram of allocation information according to an embodiment of this disclosure;
FIG. 4 is a diagram of dual-pool switching processing according to an embodiment of this disclosure;
FIG. 5 is a flowchart of a data aggregation processing method according to an embodiment of this disclosure;
FIG. 6 is a diagram of allocation information according to an embodiment of this disclosure;
FIG. 7 is a flowchart of a data aggregation processing method according to an embodiment of this disclosure;
FIG. 8 is a diagram of allocation information according to an embodiment of this disclosure;
FIG. 9 is a diagram of a structure of a data aggregation processing apparatus according to an embodiment of this disclosure;
FIG. 10 is a diagram of a structure of a data aggregation processing apparatus according to an embodiment of this disclosure;
FIG. 11 is a diagram of a compute device according to an embodiment of this disclosure;
FIG. 12 is a diagram of a computing device cluster according to an embodiment of this disclosure; and
FIG. 13 is a diagram of a computing device cluster according to an embodiment of this disclosure.

### DESCRIPTION OF EMBODIMENTS

To make the objectives, technical solutions, and advantages of this disclosure clearer, the following further describes the implementations of this disclosure in detail with reference to the accompanying drawings.

The following explains concepts in this disclosure.

### Time-series data

The time-series data is a sequence of data continuously generated over time. The time-series data carries timestamps (identifying sending time of the time-series data). For example, the time-series data may be data periodically collected by internet of things sensors, transaction data in financial markets, or the like.

### Aggregation

Aggregation, also referred to as aggregation calculation or aggregation processing, means to group data in databases into several groups according to specific rules, perform specified calculation (for example, summation) on a plurality of rows of data in each group, and take a calculation result for each group of data as an aggregation result. Aggregation of time-series data may be performing specified calculation on time-series data (for example, time-series data belonging to a same time period) that meets a specific time condition.

### Original data table

The original data table is a data table used to record original data on which no aggregation processing is performed. The original data may be data directly obtained through data collection, data generated in real time during service execution, or the like. One row of data in the original data table may be referred to as one data unit.

In embodiments of this disclosure, the solutions are described by using the original data table recording the time-series data as an example.

### Aggregated data table

The aggregated data table is a data table obtained by performing aggregation processing on data in an original data table. One row of data in the aggregated data table may be referred to as an aggregated data unit. When the data stored in the original data table is time-series data, data in the aggregated data table is also time-series data.

### Shard key (shard key)

The shard key includes at least one attribute tag of a data table, and data units may be grouped based on an attribute value corresponding to the at least one attribute tag of the data unit. The purpose of grouping may be to perform partition storage or group aggregation on a plurality of data units. A function of a shard key of an aggregated data table is to perform group aggregation on data units, and a function of a shard key of an original data table (it is assumed that the original data table is not generated through aggregation) is to perform partition storage on data units.

The following example describes how to use the shard key. For example, two data units of an original data table are M and N, a shard key of the original data table is tagA and tagB, tagA and tagB are two attribute tags in the original data table, attribute values corresponding to tagA and tagB of the data unit M are am and bm, and attribute values corresponding to tagA and tagB of the data unit N are an and bn. If am is equal to an and bm is equal to bn, the data units M and N should belong to a same group and stored in a same path. If am is not equal to an or bm is not equal to bn, the data units M and N should belong to different groups and should be stored in different paths.

The shard key for the data table may be manually set by selecting one or more attribute tags, or may be set by using a shard key creation instruction. The syntax of the shard key creation instruction is as follows:
CREATE MEASUREMENT table_name WITH SHARDKEY tagA,tagB...

In the instruction, "CREATE MEASUREMENT" is an instruction name, and "WITH SHARDKEY" is used to introduce the attribute tag included in the shard key. As the characters of the two fields are fixed, the two fields are referred to as fixed fields.

"table_name" and "tagA,tagB..." are parameter fields, and content in the parameter fields may be set depending on actual requirements. "table_name" is a table name of a data table for which the shard key is created, and "tagA,tagB..." is the attribute tag of the shard key.

### Aggregation instruction

The aggregation instruction instructs to generate an aggregated data table based on an original data table. To be specific, aggregation processing is performed on a data unit that is of the original data table and that is received after the aggregation instruction, to obtain an aggregated data unit, and the aggregated data unit is combined into the aggregated data table. Data in the aggregated data table is also time-series data.

The syntax of the aggregation instruction may be as follows:
CREATE STREAM stream _name INTO agg_table_name AS SELECT sum("value_tag") AS "agg_value_tag" FROM table _name GROUP BY TIME(time_1),"group_tagA","group_tagB" DELAY time_2

In the instruction, "CREATE STREAM" is an instruction name, and "INTO" is used to introduce a table name of the aggregated data table. "AS SELECT" is used to introduce an attribute tag of a numeric field of the original data table, and the numeric field is input data of aggregation calculation. The following "AS" is used to introduce an attribute tag of a numeric field of the aggregated data table, and the numeric field is an aggregation result. "FROM" is used to introduce a table name of the original data table, "GROUP BY" is used to introduce an aggregation condition, "TIME" is used to introduce duration corresponding to a time window, and "DELAY" is used to introduce delay duration. As the characters of the several fields are fixed, the several fields may be referred to as fixed fields.

"stream_name", "agg_table_name", "sum("value_tag")", "agg_value_tag", "table_name", "time_1", "group_tagA", "group _tagB" and "time_2" are parameter fields, and content in the parameter fields may be set based on an actual requirement. The following describes the fields one by one.

"stream_name" is a task name of a streaming aggregation task, "agg_table_name" is the table name of the aggregated data table, the aggregated data table is a data table recording result data obtained by performing aggregation calculation on time-series data, "table_name" is the table name of the original data table, and the original data table is a data table recording the time-series data.

"TIME(time_1),"group_tagA","group_tagB"" may be generally referred to as the aggregation condition. "time_1" is the duration of the time window, and the time window is a time unit for aggregation processing. For example, when time_1 is 1 m, it indicates that the time window is created by using 1 minute as a time unit, and it means that data units within 1 minute are aggregated to obtain an aggregated data unit. "group_tagA" and "group_tagB" are attribute tags of the original data table, and are also attribute tags of columns that need to be added to the aggregated data table (two attribute tags are used as an example herein, and a quantity of attribute tags may be any positive integer). When the aggregated data table is generated, two columns of data in the original data table are added to the aggregated data table. Based on setting of aggregation instruction parsing logic, "group_tagA" and "group_tagB" may be set as a shard key of the aggregated data table by default. The foregoing aggregation condition indicates that "time_1" is used as the duration of the time window, for a plurality of data units in one time window, data units whose "group_tagA" and "group_tagB" correspond to a completely same attribute value are one group, and data units in a same group are aggregated to obtain one aggregated data unit.

"time_2" is the delay duration, and the delay duration is allowed delay duration of data unit transmission. For example, the duration of the time window is 5 minutes, the delay duration is 1 m (1 minute), and 9:00 to 9:05 is one time window. When a data unit whose timestamp is 9:04 is received at 9:05:30, the data unit is received before 9:06 (obtained by adding 1 minute to 9:05), and the data unit may be aggregated with another data unit in the time window from 9:00 to 9:05.

"value _tag" is the attribute tag corresponding to the numeric field (the input data of the aggregation calculation) of the original data table. "sum()" indicates an aggregation calculation algorithm. Herein, addition is used as an example. Another algorithm may alternatively be used. In addition to summation "sum", a calculation task may alternatively be calculating an average value, a maximum value, a minimum value, a variance, or the like. Technical personnel may set the calculation task based on an actual service requirement. "agg_value_tag" is the attribute tag corresponding to the numeric field (the aggregation result) of the aggregated data table.

To describe the foregoing aggregation instruction in more detail, an example is provided herein.

It is assumed that the aggregation instruction is:
CREATE STREAM test INTO table_2 AS SELECT sum("value") AS "agg_value" FROM table_1 GROUP BY TIME(1m),"tagA","tagB" DELAY 20s

The table name corresponding to the original data table is table_1. It is assumed that a set of time-series data in a time window in table_1 is shown in Table 1.

**Table 1**

| tagA | tagB | value |
|---|---|---|
| a1 | b1 | 11 |
| a1 | b1 | 35 |
| a1 | b2 | 25 |
| a1 | b2 | 8 |
| a2 | b1 | 71 |
| a2 | b1 | 19 |
| a2 | b2 | 33 |
| a2 | b2 | 52 |

Based on values of tagA and tagB in the aggregation condition, the time-series data may be divided into four groups, which are respectively: a first group, including data units whose attribute values corresponding to tagA are a1 and whose attribute values corresponding to tagB are b1; a second group, including data units whose attribute values corresponding to tagA are a1 and whose attribute values corresponding to tagB are b2; a third group, including data units whose attribute values corresponding to tagA are a2 and whose attribute values corresponding to tagB are b1; and a fourth group, including data units whose attribute values corresponding to tagA are a2 and whose attribute values corresponding to tagB are b2. {a1, b1}, {a1, b2}, {a2, b1}, and {a2, b2} are four attribute value sets of table_1. Each attribute value set corresponds to one group.

Summation calculation is separately performed on attribute values of the four groups of data units to obtain four aggregated data units, and the aggregated data units are recorded in the aggregated data table, that is, table _2, as shown in Table 2.

**Table 2**

| tagA | tagB | value |
|---|---|---|
| a1 | b1 | 46 |
| a1 | b2 | 33 |
| a2 | b1 | 90 |
| a2 | b2 | 85 |

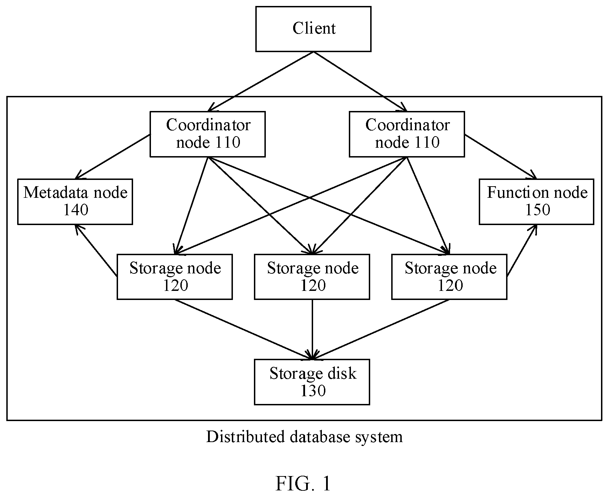

An embodiment of this disclosure provides a data processing method. The method may be applied to a distributed database system. The distributed database system may include at least one coordinator node 110 (also referred to as a compute node), a plurality of storage nodes 120, and a storage disk 130, and may further include a metadata node 140, a function node 150, and the like. A structure of the distributed database system is shown in FIG. 1. In FIG. 1, all of the storage nodes 120 have connection relationships with the metadata node 140, and all of the storage nodes 120 also have connection relationships with the function node 150. In FIG. 1, only one connection relationship is shown as an example. Similarly, in FIG. 1, all coordinator nodes 110 have connection relationships with the metadata node 140, and all of the coordinator nodes 110 also have connection relationships with the function node 150. In FIG. 1, only one connection relationship is shown as an example. The following separately describes each component in the distributed database system.

The coordinator node 110 may be an independent computer device, a virtual machine, a computer cluster, or the like. The coordinator node 110 may receive time-series data and perform parsing, format conversion, preprocessing, and the like on the time-series data, and may further determine, according to a specific distribution rule, a storage node corresponding to each piece of time-series data, and send each piece of time-series data to the corresponding storage node. The distribution rule may be automatically generated by the coordinator node, or may be manually set.

The storage node 120 may be an independent computer device, a virtual machine, a computer cluster, or the like. The storage node 120 is configured to organize the time-series data for disk flushing, that is, store the time-series data in the storage disk, or may be configured to perform other processing on the time-series data, for example, aggregation processing. The distributed database system includes a plurality of storage nodes, and different storage nodes store time-series data received by the storage nodes in different paths of the storage disk.

The storage disk 130 is an underlying storage medium, and is configured to store data. There may be a plurality of storage disks 130, and the storage disks 130 may be located in one or more devices.

The metadata node 140 may be configured to store various types of metadata, for example, record information about the foregoing distribution rule.

The function node 150 may be configured to store a function edited by a user.

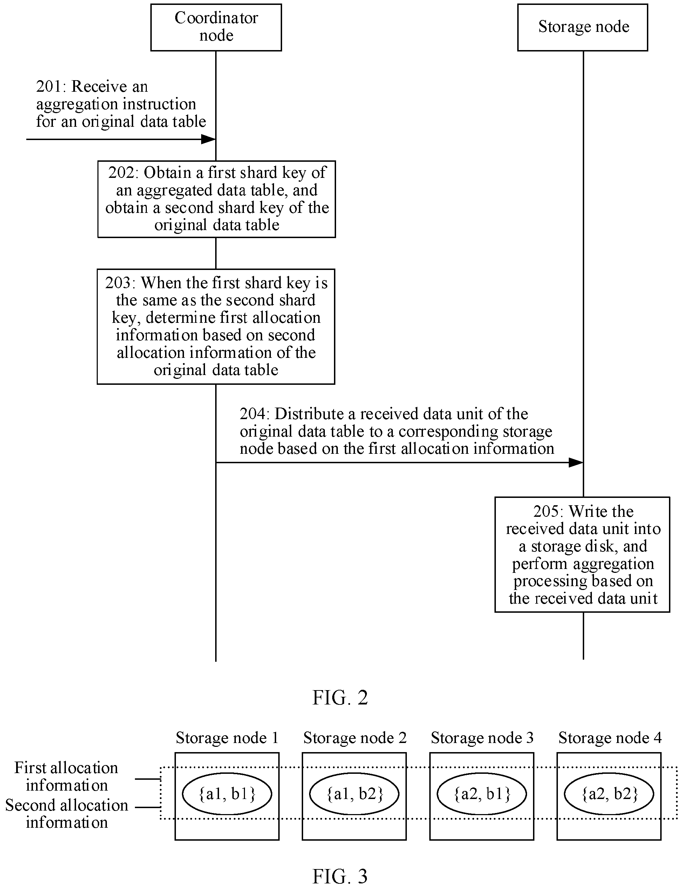

The distributed database system may be configured to store the time-series data. In the related technology, real-time aggregation calculation on the time-series data is generally performed in a big data component. An embodiment of this disclosure provides a data aggregation processing method. The method is applied to a distributed database system. In this way, the distributed database system can not only store time-series data, but also perform real-time aggregation processing on the time-series data, to save transmission resources. As shown in FIG. 2, a processing procedure of the method includes the following steps.

Step 201: A coordinator node receives an aggregation instruction for an original data table.

The aggregation instruction instructs to generate an aggregated data table based on the original data table. To be specific, aggregation processing is performed on a subsequently received data unit of the original data table, to obtain an aggregated data unit, and the aggregated data unit is combined into the aggregated data table. Data in the aggregated data table is also time-series data.

Step 202: The coordinator node obtains a first shard key of the aggregated data table, and obtains a second shard key of the original data table.

A shard key is a set of several attribute tags. Both the aggregated data table and the original data table have corresponding shard keys. For the aggregated data table, the first shard key may be set by using a shard key instruction, or all attribute tags in an aggregation condition in the aggregation instruction may be directly set as the first shard key. Each attribute tag included in the first shard key may be referred to as a first attribute tag. For the original data table, the second shard key corresponding to the original data table may be set by using the shard key instruction, and all attribute tags included in the second shard key are referred to as second attribute tags.

Step 203: When the first shard key is the same as the second shard key, the coordinator node determines first allocation information based on second allocation information of the original data table.

The first allocation information indicates how to distribute the data unit during aggregation, and records storage nodes respectively allocated to a plurality of first attribute value sets corresponding to the first shard key. The allocated storage node is configured to perform aggregation processing, and the first attribute value set includes an attribute value of each first attribute tag. The second allocation information indicates how to distribute the data unit during disk flushing, and records storage nodes respectively allocated to a plurality of second attribute value sets corresponding to the second shard key. The allocated storage node is configured to perform disk flushing processing, and the second attribute value set is composed of one attribute value of each second attribute tag.

The following describes the second allocation information in detail.

The coordinator node may generate the second allocation information of the original data table after receiving a shard key creation instruction corresponding to the original data table and completing setting of the second shard key. Specifically, attribute values corresponding to different attribute tags may be separately combined based on different values corresponding to the second attribute tags of the second shard key of the original data table, to generate a plurality of second attribute value sets. For example, the second attribute tags include three attribute tags, and each attribute tag has two different attribute values. One attribute value of an attribute tag A, one attribute value of an attribute tag B, and one attribute value of an attribute tag C are used to form one second attribute value set, and a total of eight second attribute value sets may be generated.

The coordinator node allocates the storage nodes respectively to all of the second attribute value sets, to obtain the second allocation information. For example, a storage node 1 is allocated to {a1, b1}, and a storage node 2 is allocated to {a1, b2}, until storage nodes are allocated to all second attribute value sets. The storage nodes allocated to all of the second attribute value sets may be the same or may be different.

When there are a plurality of coordinator nodes, after setting the second allocation information, the coordinator node may send the second allocation information to a metadata node for storage. Another coordinator node may periodically access the metadata node. After the second allocation information is stored in the metadata node, the another coordinator node may read the second allocation information for subsequent data distribution.

After performing step 202 to obtain the first shard key of the aggregated data table and the second shard key of the original data table, the coordinator node may determine whether the first shard key is completely equal to the second shard key, to be specific, determine whether the first attribute tag of the first shard key is completely equal to the second attribute tag of the second shard key. When the first attribute tag of the first shard key is completely equal to the second attribute tag of the second shard key, processing of determining the first allocation information may be as follows.

The first shard key is completely the same as the second shard key, and the plurality of first attribute value sets are also completely the same as the plurality of second attribute value sets. When a storage node is allocated to each first attribute value set, storage nodes corresponding to the first attribute value set and the second attribute value set that are the same may be set to be the same, to obtain the first allocation information. In this way, it may be considered that the first allocation information is the same as the second allocation information.

The following further describes the second allocation information and the first allocation information by using an example.

Data in a time window of a distributed database is shown in Table 1. It is assumed that the second shard key is tagA and tagB, a value of tagA is a1 or a2, and a value of tagB is b1 or b2. Four second attribute value sets {a1, b1}, {a1, b2}, {a2, b1}, and {a2, b2} may be obtained. A storage node is allocated to each second attribute value set to obtain the second allocation information. As shown in FIG. 3, it is assumed that the second allocation information is {a1, b1}→storage node 1, {a1, b2}→storage node 2, {a2, b1}→storage node 3, and {a2, b2}→storage node 4. It is assumed that the first shard key is tagA and tagB. First attribute value sets {a1, b1}, {a1, b2}, {a2, b1}, and {a2, b2} may be obtained, and the first allocation information {a1, b1}→storage node 1, {a1, b2}→storage node 2, {a2, b1}→storage node 3, and {a2, b2}→storage node 4 is obtained. It may be considered that the first allocation information is the same as the second allocation information.

When there are a plurality of coordinator nodes, after setting the first allocation information, the coordinator node may send the first allocation information to the metadata node for storage. Another coordinator node may periodically access the metadata node to obtain the first allocation information for subsequent data distribution.

Step 204: The coordinator node distributes the received data unit of the original data table to a corresponding storage node based on the first allocation information.

After receiving the data unit, the coordinator node searches the first allocation information for a first attribute value set included in the data unit and the corresponding storage node, and adds an aggregation mark and a write mark to the data unit. The write mark indicates that disk flushing needs to be performed on the data unit, and the aggregation mark indicates that aggregation processing needs to be performed on the data unit. Then, the marked data unit is sent to the storage node.

The following uses an example for further description (the example in step 203 is still used).

Data units whose attribute values corresponding to the second attribute tags are {a1, b1} are distributed to the storage node 1, data units whose attribute values corresponding to the second attribute tags are {a1, b2} are distributed to the storage node 2, data units whose attribute values corresponding to the second attribute tags are {a2, b1} are distributed to the storage node 3, and data units whose attribute values corresponding to the second attribute tags are {a2, b2} are distributed to the storage node 4. In other words, a first row of data and a second row of data in Table 1 are sent to the storage node 1, a third row of data and a fourth row of data in Table 1 are sent to the storage node 2, a fifth row of data and a sixth row of data in Table 1 are sent to the storage node 3, and a seventh row of data and an eighth row of data in Table 1 are sent to the storage node 4.

Step 205: The storage node writes the received data unit into a storage disk, and performs aggregation processing based on the received data unit.

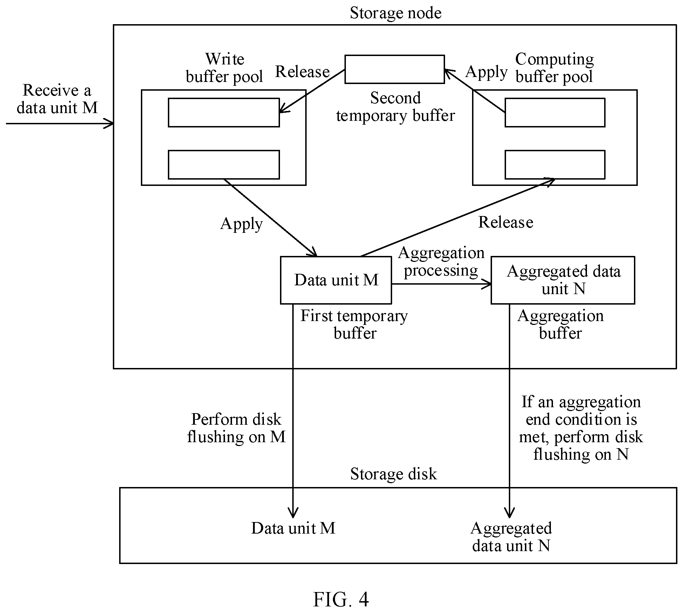

The storage node establishes a first buffer pool (also referred to as a write buffer pool) and a second buffer pool (also referred to as a computing buffer pool). After receiving the data unit carrying the aggregation mark and the write mark, the storage node applies to the write buffer pool for a first temporary buffer, and writes the received data unit into the first temporary buffer. Then, the storage node writes the data unit in the first temporary buffer into the storage disk. After the writing is completed, the storage node applies to the computing buffer pool for a second temporary buffer that has a same space size as the first temporary buffer, and releases the second temporary buffer to the write buffer pool. The storage node performs aggregation processing based on the data unit in the first temporary buffer, writes an aggregation result (the aggregation result may be an intermediate aggregation result or a final aggregation result) into an aggregation buffer, and then releases the first temporary buffer to the computing buffer pool. In this way, when an aggregation processing algorithm is addition, each time a data unit is received, an attribute value used for aggregation in the data unit is added to a previously calculated accumulated value, to obtain a new accumulated value. When an aggregation end condition is met, to be specific, when delay duration (carried in the aggregation instruction) elapses after an end time point of a time window is reached, the storage node writes the aggregation result in the aggregation buffer into the storage disk, as shown in FIG. 4.

Due to existence of a delay mechanism, the aggregation buffer in the storage node may maintain aggregation results (for example, the foregoing accumulated values) corresponding to a plurality of time windows. For example, each minute is one time window, and 20s (20 seconds) is the delay duration. In a time period from 9:01 to 9:01:20, the aggregation buffer maintains aggregation results in both a time window from 9:00 to 9:01 and a time window from 9:01 to 9:02. In this time period, if a data unit whose timestamp is in the time window from 9:00 to 9:01 is received, an aggregation result corresponding to the time window from 9:00 to 9:01 in the aggregation buffer may be added, to update the aggregation result. If a data unit whose timestamp is in the time window from 9:01 to 9:02 is received, an aggregation result corresponding to the time window from 9:01 to 9:02 in the aggregation buffer may be added, to update the aggregation result. At 9:01:20, the aggregation result corresponding to the time window from 9:00 to 9:01 in the aggregation buffer is determined as the final aggregation result, and is written into the storage disk.

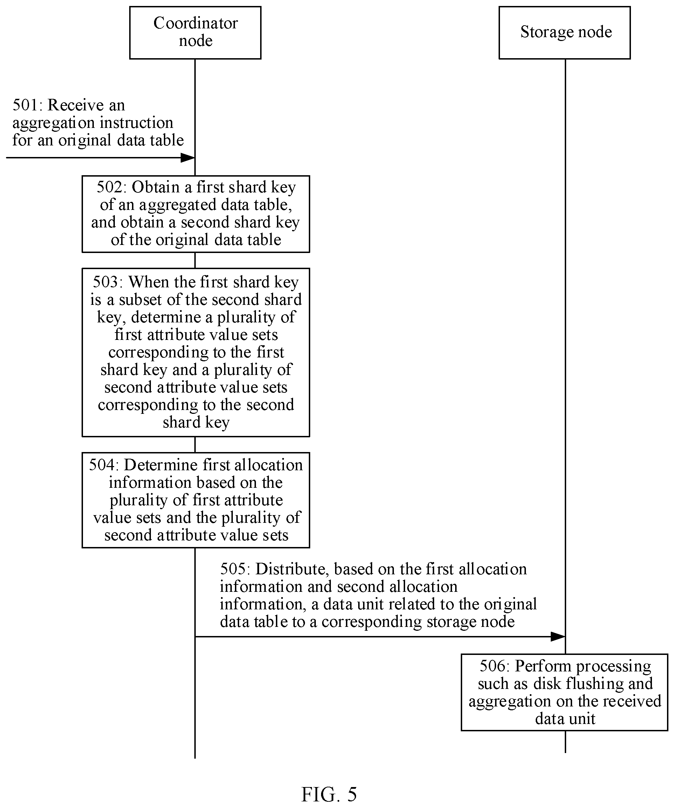

The foregoing processing procedure in FIG. 2 is applicable to a case in which the first shard key of the aggregated data table is completely the same as the second shard key of the original data table. When the first shard key is different from the second shard key, and the first attribute tag corresponding to the first shard key is a subset of the second attribute tag corresponding to the second shard key, a processing procedure shown in FIG. 5 may be used, and includes the following steps.

Step 501: A coordinator node receives an aggregation instruction for an original data table.

Specific processing of this step is the same as that of step 201. For details, refer to related description content of step 201.

Step 502: The coordinator node obtains a first shard key of an aggregated data table, and obtains a second shard key of the original data table.

Specific processing of this step is the same as that of step 202. For details, refer to related description content of step 202.

Step 503: When the first shard key is a subset of the second shard key, the coordinator node determines a plurality of first attribute value sets corresponding to the first shard key and a plurality of second attribute value sets corresponding to the second shard key.

The coordinator node determines that the first shard key is the subset of the second shard key, to be specific, determines that the first shard key is different from the second shard key, and that the second attribute tag corresponding to the second shard key completely includes the first attribute tag corresponding to the first shard key. The first shard key corresponds to a plurality of first attribute value sets, and the first attribute value set includes an attribute value of each first attribute tag. The second shard key corresponds to a plurality of second attribute value sets, and the second attribute value set is composed of one attribute value of each second attribute tag.

Step 504: The coordinator node determines first allocation information based on the plurality of first attribute value sets and the plurality of second attribute value sets.

The coordinator node obtains second allocation information of a distributed database, that is, obtains a storage node corresponding to each second attribute value set. The coordinator node obtains the plurality of first attribute value sets based on the first shard key, and for each first attribute value set, at least one second attribute value set including the first attribute value set may be found. Then, at least one storage node corresponding to the at least one second attribute value set may be determined. One storage node is selected from the at least one storage node. A selection manner may be random selection, selection in a specified order, or selection based on a load balancing principle. Then, the selected storage node may be allocated to the corresponding first attribute value set, to obtain the first allocation information.

The following uses an example for description.

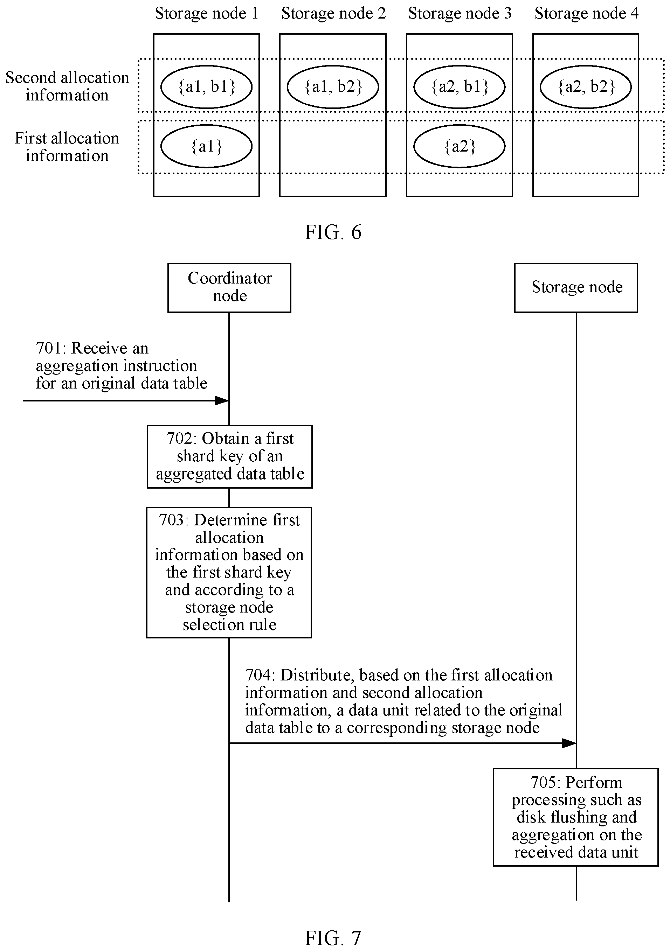

Data in a time window of a distributed database is shown in Table 1. It is assumed that the second shard key is tagA and tagB, a value of tagA is a1 or a2, and a value of tagB is b1 or b2. Four second attribute value sets {a1, b1}, {a1, b2}, {a2, b1}, and {a2, b2} may be obtained. A storage node is allocated to each second attribute value set to obtain the second allocation information. As shown in FIG. 6, it is assumed that the second allocation information is {a1, b1}→storage node 1, {a1, b2}→storage node 2, {a2, b1}→storage node 3, and {a2, b2}→storage node 4. It is assumed that the first shard key is tagA. Two first attribute value sets {a1} and {a2} may be obtained. Second attribute value sets including the first attribute value set {a1} include {a1, b1} and {a1, b2}. Either of the storage node 1 and the storage node 2 corresponding to {a1, b1} and {a1, b2} is selected as a storage node corresponding to {al}. It is assumed that the storage node 1 is selected as the storage node corresponding to {a1}. Second attribute value sets including the first attribute value set {a2} include {a2, b1} and {a2, b2}. Either of the storage node 3 and the storage node 4 corresponding to {a2, b1} and {a2, b2} is selected as a storage node corresponding to {a2}. It is assumed that the storage node 3 is selected as the storage node corresponding to {a2}. Then, the first allocation information {a1}→storage node 1 and {a2}→storage node 3 is obtained.

Step 505: The coordinator node distributes, based on the first allocation information and the second allocation information, a data unit related to the original data table to a corresponding storage node.

The coordinator node may add, based on the first allocation information and the second allocation information, an aggregation mark and/or a write mark to the data unit related to the original data table, and distribute the data unit to the corresponding storage node. The aggregation mark indicates the storage node to perform aggregation processing on the data unit. The write mark indicates the storage node to perform disk flushing processing on the data unit. The data unit related to the original data table may be a data unit that is of the original data table and that is directly received by the coordinator node, or may be a data unit obtained by performing some processing (for example, processing of deleting a part of fields and aggregation processing) on the received data unit of the original data table by coordinator node.

The foregoing processing of deleting a part of fields may be: for a data unit to which the aggregation mark is added but the write mark is not added, before the data unit is sent, an attribute value (namely, a numeric field) that needs to be aggregated is retained in the data unit, and another attribute value is deleted.

The following content describes in detail specific operation steps of distributing the data unit. A solution in which the coordinator node participates in a part of aggregation processing is also described in detail below.

Step 506: The storage node performs processing such as disk flushing and aggregation on the received data unit.

After receiving the data unit, the storage node processes the data unit based on the aggregation mark and the write mark carried in the data unit. The following separately describes processing manners corresponding to three different marking cases.

Case 1: For a data unit carrying both the write mark and the aggregation mark, a processing manner is the same as that in step 205.

Case 2: For a data unit carrying only the write mark, after receiving the data unit, the storage node applies to a write buffer pool for a third temporary buffer, and writes the received data unit into the third temporary buffer. Then, the storage node writes the data unit in the third temporary buffer into a storage disk, and then releases the third temporary buffer to the write buffer pool.

Case 3: For a data unit carrying only the aggregation mark, after receiving the data unit, the storage node applies to a computing buffer pool for a fourth temporary buffer, and writes the received data unit into the fourth temporary buffer. The storage node performs aggregation processing based on the data unit in the fourth temporary buffer, writes an aggregation result into an aggregation buffer, and then releases the fourth temporary buffer to the computing buffer pool. When an aggregation end condition is met, the storage node writes the aggregation result in the aggregation buffer into a storage disk.

An embodiment of this disclosure further provides another data aggregation processing method. This processing method is applicable to a very wide range of scenarios, and may be applied to any case in which a first shard key is different from a second shard key. This processing method may also be used when the first shard key is a subset of the second shard key. A processing procedure of the method may be shown in FIG. 7, and includes the following steps.

Step 701: A coordinator node receives an aggregation instruction for an original data table.

Specific processing of this step is the same as that of step 201. For details, refer to related description content of step 201.

Step 702: The coordinator node obtains a first shard key of an aggregated data table.

Specific processing of this step is the same as that of step 202. For details, refer to related description content of step 202.

Step 703: The coordinator node determines first allocation information based on the first shard key and according to a storage node selection rule.

The coordinator node obtains a first attribute tag and a second attribute tag corresponding to the first shard key and a second shard key. There are the following two cases: One case is that the first attribute tag is completely different from the second attribute tag. The other case is that the first attribute tag and the second attribute tag have an intersection but the first attribute tag is not completely included in the second attribute tag. For the two cases, the first allocation information may be determined based on the first shard key. A specific processing process may be determining a plurality of first attribute value sets corresponding to the first shard key, and allocating a storage node to each first attribute value set. A storage node selection rule may be random selection, selection in a specified order, or selection based on a load balancing principle.

The following uses an example for description.

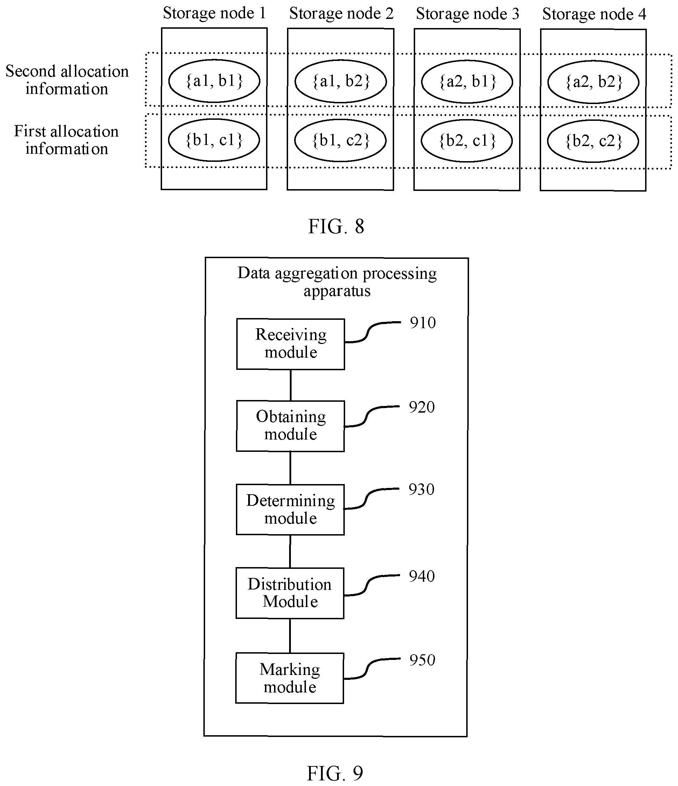

Data in a time window of a distributed database is shown in Table 3. It is assumed that the second shard key is tagA and tagB, a value of tagA is a1 or a2, and a value of tagB is b1 or b2. Four second attribute value sets {a1, b1}, {a1, b2}, {a2, b1}, and {a2, b2} may be obtained. A storage node is allocated to each second attribute value set to obtain second allocation information. As shown in FIG. 8, it is assumed that the second allocation information is {a1, b1}→storage node 1, {a1, b2}→storage node 2, {a2, b1}→storage node 3, and {a2, b2}→storage node 4. It is assumed that the first shard key is tagB and tagC, the value of tagB is b1 or b2, and a value of tagC is c1 or c2. Four first attribute value sets {b1, c1}, {b1, c2}, {b2, c1}, and {b2, c2} may be obtained. A storage node is allocated to each attribute value set to obtain the first allocation information. It is assumed that the first allocation information is {b1, c1}→storage node 1, {b1, c2}-storage node 2, {b2, c 1}→storage node 3, and {b2, c2}→storage node 4.

**Table 3**

| tagA | tagB | tagC | value |
|---|---|---|---|
| a1 | b1 | c1 | 11 |
| a1 | b1 | c2 | 35 |
| a1 | b2 | c1 | 25 |
| a1 | b2 | c2 | 8 |
| a2 | b1 | c1 | 71 |
| a2 | b1 | c2 | 19 |
| a2 | b2 | c1 | 33 |
| a2 | b2 | c2 | 52 |

Step 704: The coordinator node distributes, based on the first allocation information and the second allocation information, a data unit related to the original data table to a corresponding storage node.

Processing of this step is similar to that of step 505. For details, refer to related description content of step 505.

Step 705: The storage node performs processing such as disk flushing and aggregation on the received data unit.

Processing of this step is similar to that of step 506. For details, refer to related description content of step 506.

In this embodiment of this disclosure, for the received data unit of the original data table, if the storage node that performs aggregation processing and that corresponds to the data unit and a storage node that performs disk flushing processing and that corresponds to the data unit are not a same storage node, it may be considered that first-level aggregation processing is first performed on the data unit on the coordinator node, and then second-level aggregation processing is performed on the storage node (because one coordinator node cannot obtain all data units that need to be aggregated, final aggregation, that is, second-level aggregation, needs to be completed on the storage node). Whether to perform two-level aggregation may be determined by using a pre-determining process. To be specific, two working modes are set for the coordinator node. Mode 1 is a mode in which the coordinator node does not participate in aggregation, and Mode 2 is a mode in which the coordinator node participates in aggregation. For the two modes, selection may be performed based on some reference information. The reference information may include related information of the original data table, and may further include related information of the coordinator node. For example, an input-output ratio of aggregation processing of the original data table is a ratio of an amount of data before the aggregation to an amount of data after the aggregation (which may be estimated based on experience or may be measured by performing an experiment on the original data table). When the input-output ratio is greater than a specified threshold, Mode 2 is used; or when the input-output ratio is less than a specified threshold, Mode 1 is used. The specified threshold may be set based on the experience or the experiment.

In Mode 1, processing of step 505 and step 704 may be as follows.

After receiving a data unit of original data, the coordinator node determines, in the first allocation information, a first attribute value set that matches the data unit, to determine a first storage node corresponding to the first attribute value set, and determines, in the second allocation information, a second attribute value set that matches the data unit, to determine a second storage node corresponding to the second attribute value set. If the first storage node is the same as the second storage node, a write mark and an aggregation mark may be added to the data unit, and the marked data unit is sent to the storage node. If the first storage node is different from the second storage node, one copy of the data unit is made. An aggregation mark is added to one of the two data units, and the marked data unit is sent to the first storage node. A write mark is added to the other of the two data units, and the marked data unit is sent to the second storage node. Optionally, for a data unit to which the aggregation mark is added but the write mark is not added, before the data unit is sent, an attribute value (namely, a numeric field) that needs to be aggregated is retained in the data unit, and another attribute value is deleted.

The following uses an example for description (examples in step 504 and step 703 are still used separately).

The processing of step 505 corresponding to the example in step 504 is still used.

A first attribute value set that matches a first row of data unit in Table 1 is {a1}, and a matched second attribute value set is {a1, b1}. Storage nodes corresponding to {a1} and {a1, b1} are both a storage node 1. The write mark and the aggregation mark are added to the data unit, and the marked data unit is distributed to the storage node 1. Similar to the first row of data unit, the write mark and the aggregation mark are also added to a second row of data unit, and the second row of data unit is sent to the storage node 1. A first attribute value set that matches a third row of data unit is {a1}, and a matched second attribute value set is {a1, b2}. The storage node corresponding to {a1} is the storage node 1, and a storage node corresponding to {a1, b2} is a storage node 2. One copy of a third row of data is further made. The aggregation mark is added to one copy thereof, and the copy is distributed to the storage node 1. The write mark is added to the other copy, and the other copy is distributed to the storage node 2. A fourth row of data unit is similar to the third row of data unit. One copy of a fourth row of data is further made. The aggregation mark is added to one copy thereof, and the copy is distributed to the storage node 1. The write mark is added to the other copy, and the other copy is distributed to the storage node 2. Processing steps of a fifth row of data unit to an eighth row of data unit are the same as the foregoing processing steps, and are not enumerated one by one again herein.

Optionally, for a data unit to which the aggregation mark is added but the write mark is not added, before the data unit is sent, an attribute value (namely, a numeric field) corresponding to tagA is retained in the data unit, and another attribute value is deleted.

The processing of step 704 corresponding to the example in step 703 is still used.

A first attribute value set that matches a first row of data unit in Table 3 is {b1, c1}, and a matched second attribute value set is {a1, b1}. A storage node corresponding to {b1, c1} and {a1, b1} is a storage node 1. The write mark and the aggregation mark are added to the first row of data, and the marked data unit is distributed to the storage node 1. A first attribute value set that matches a second row of data unit is {b1, c2}, and a matched second attribute value set is {a1, b1}. A storage node corresponding to {b1, c2} is a storage node 2, and the storage node corresponding to {a1, b1} is the storage node 1. One copy of the second row of data unit is further made. The aggregation mark is added to one copy thereof, and the copy is distributed to the storage node 2. The write mark is added to the other copy, and the other copy is distributed to the storage node 1. Processing steps of a third row of data unit to an eighth row of data unit are the same as the foregoing processing steps, and are not enumerated one by one again herein.

Optionally, for a data unit to which the aggregation mark is added but the write mark is not added, before the data unit is sent, attribute values (namely, numeric fields) corresponding to tagB and tagC are retained in the data unit, and another attribute value is deleted.

In Mode 2, processing of step 505 and step 704 may be as follows.

Processing of adding an aggregation mark and a write mark to the data unit of the original data table is the same as that in Mode 1. When there are a plurality of to-be-sent data units that are of the original data table and to which the aggregation mark is added but to which the write mark is not added, after attribute values that need to be aggregated are retained in these data units, and other attribute values are deleted, the coordinator node may perform aggregation processing on these data units, add the aggregation mark to data units obtained through the aggregation processing, and send the data units to the storage node. The storage node may perform second-level aggregation processing based on the received data unit obtained through the aggregation processing.

An embodiment of this disclosure further provides an instruction for viewing an aggregation task. The syntax of the instruction may be as follows:
SHOW STREAMS

As characters in the instruction are fixed, the instruction is used to view running statuses of all aggregation tasks created by using an aggregation instruction.

An embodiment of this disclosure further provides an instruction for deleting an aggregation task. The syntax of the instruction may be as follows:
DROP STREAM stream _name

DROP STREAM is an instruction name. As characters of the field are fixed, the field may be referred to as a fixed field. "stream_name" is a parameter field, and content in the parameter field may be set based on an actual requirement. "stream_name" is a task name of a streaming aggregation task.

The instruction is used to delete the streaming aggregation task whose task name is "stream_name". After the streaming aggregation task is deleted, an original data table may further continue to be used to record time-series data, and an aggregated data table stops being used to record data.

In embodiments of this disclosure, data aggregation processing is performed by a distributed database system. In this way, both data storage and data aggregation processing are completed by a distributed database, and no additional processing system needs to be set up to perform data aggregation processing. Therefore, data does not need to be replicated and separately sent to the distributed database system and the additionally set up processing system. In this manner, occupation of transmission resources can be reduced.

Based on a same technical concept, an embodiment of this disclosure provides a data aggregation processing apparatus. The apparatus may be used in the foregoing coordinator node. As shown in FIG. 9, the apparatus includes:
a receiving module 910, configured to receive an aggregation instruction for an original data table, where the receiving module 910 may specifically implement processing functions of steps 201, 501, and 701 and other implicit steps;
an obtaining module 920, configured to obtain a first shard key of an aggregated data table corresponding to the original data table, where the aggregated data table is used to record data obtained by performing aggregation processing on data in the original data table, the first shard key includes at least one first attribute tag of the aggregated data table, and the obtaining module 920 may specifically implement processing functions of steps 202, 502, and 702 and other implicit steps;
a determining module 930, configured to determine first allocation information, where the first allocation information indicates storage nodes that are respectively allocated to a plurality of first attribute value sets corresponding to the first shard key and that are configured to perform aggregation processing, the first attribute value set includes an attribute value of each first attribute tag, and the determining module 930 may specifically implement processing functions of steps 203, 504, and 703 and other implicit steps; and
a distribution module 940, configured to compare the first attribute value set in the first allocation information with an attribute value in a data unit corresponding to the original data table, to distribute the data unit corresponding to the original data table to a corresponding storage node, and the distribution module 940 may specifically implement processing functions of steps 204, 505, and 704 and other implicit steps.

In a possible implementation, the determining module 930 is configured to determine the first allocation information based on second allocation information of the original data table, where the second allocation information indicates storage nodes that are respectively allocated to a plurality of second attribute value sets corresponding to a second shard key and that are configured to perform disk flushing processing, the storage node indicated by the second allocation information is configured to perform disk flushing processing, the second attribute value set is composed of one attribute value of each second attribute tag, and in the first allocation information and the second allocation information, storage nodes corresponding to a same attribute value set are the same. The determining module 930 may specifically implement a processing function of step 203 and other implicit steps.

In a possible implementation, the determining module 930 is configured to: determine the plurality of first attribute value sets corresponding to the first shard key and a plurality of second attribute value sets corresponding to the second shard key, where the second attribute value set is composed of one attribute value of each second attribute tag; and determine the first allocation information based on the plurality of first attribute value sets and the plurality of second attribute value sets. The determining module 930 may specifically implement a processing function of step 503 and other implicit steps.

In a possible implementation, the determining module 930 is configured to: for each first attribute value set, determine at least one second attribute value set including the first attribute value set, and select, from storage nodes corresponding to the at least one second attribute value set, one storage node as a storage node corresponding to the first attribute value set; and determine the first allocation information based on the storage node corresponding to each first attribute value set. The determining module 930 may specifically implement a processing function of step 504 and other implicit steps.

In a possible implementation, the determining module 930 is configured to determine the first allocation information according to a storage node selection rule, where the storage node selection rule includes random selection, selection in a specified order, or selection based on resource occupancy. The determining module 930 may specifically implement a processing function of step 504 and other implicit steps.

In a possible implementation, the first shard key is different from a second shard key and is not a subset of the second shard key, and the second shard key includes at least one second attribute tag of the original data table.

In a possible implementation, the first shard key is determined according to the aggregation instruction.

In a possible implementation, the apparatus further includes a marking module 950, configured to separately compare the first attribute value set in the first allocation information and the second attribute value set in the second allocation information with the attribute value in the data unit corresponding to the original data table, to add an aggregation mark and/or a write mark to the data unit corresponding to the original data table. The marking module 950 may specifically implement processing functions of steps 204, 505, and 704 and other implicit steps. The distribution module 940 is configured to distribute the marked data unit to the corresponding storage node, where the second allocation information indicates the storage nodes that are respectively allocated to the plurality of second attribute value sets corresponding to the second shard key and that are configured to perform disk flushing processing, the storage node indicated by the second allocation information is configured to perform disk flushing processing, the second shard key includes the at least one second attribute tag of the original data table, the second attribute value set is composed of one attribute value of each second attribute tag, the aggregation mark indicates the storage node to perform aggregation processing on the data unit, and the write mark indicates the storage node to perform disk flushing processing on the data unit. The distribution module 940 may specifically implement processing functions of steps 204, 505, and 704 and other implicit steps.

In a possible implementation, the determining module 930 is configured to: determine, in the first allocation information, a first attribute value set that matches an attribute value of a received first data unit of the original data table and a corresponding first storage node, and determine, in the second allocation information, a second attribute value set that matches the attribute value of the received first data unit of the original data table and a corresponding second storage node. Specifically, the determining module 930 may implement processing functions of steps 203, 504, and 703 and other implicit steps.

The marking module 950 is configured to: when the first storage node and the second storage node are a same storage node, add the aggregation mark and the write mark to the first data unit. The marking module 950 may specifically implement a processing function of step 204 and other implicit steps.

The distribution module 940 is configured to send the marked data unit to the first storage node, and may specifically implement the processing function of step 204 and other implicit steps.

The marking module 950 is configured to: when the first storage node and the second storage node are not a same storage node, replicate the first data unit to obtain a second data unit, perform aggregation processing on the first data unit and another data unit that matches the first attribute value set, add the aggregation mark to a data unit obtained through the aggregation processing, and add the write mark to the second data unit. The marking module 950 may specifically implement processing functions of steps 505 and 704 and other implicit steps.

The distribution module 940 is configured to: send the first data unit to the first storage node, and send the second data unit to the second storage node. The distribution module 940 may specifically implement the processing functions of steps 505 and 704 and other implicit steps.

In a possible implementation, the determining module 930 is configured to: determine, in the first allocation information, a first attribute value set that matches an attribute value of a received first data unit of the original data table and a corresponding first storage node, and determine, in the second allocation information, a second attribute value set that matches the received first data unit of the original data table and a corresponding second storage node. Specifically, the determining module 930 may implement a processing function of step 505 and other implicit steps.

The marking module 950 is configured to: when the first storage node and the second storage node are a same storage node, add the aggregation mark and the write mark to the first data unit. The marking module 950 may specifically implement a processing function of step 504 and other implicit steps.

The distribution module 940 is configured to send the marked data unit to the first storage node, and may specifically implement the processing function of step 504 and other implicit steps.

The marking module 950 is configured to: when the first storage node and the second storage node are not a same storage node, replicate the first data unit to obtain a second data unit, add the aggregation mark to the first data unit, and add the write mark to the second data unit. The marking module 950 may specifically implement processing functions of steps 505 and 704 and other implicit steps.

The distribution module 940 is configured to: send the first data unit to the first storage node, and send the second data unit to the second storage node. The distribution module 940 may specifically implement the processing functions of steps 505 and 704 and other implicit steps.

In this embodiment of this disclosure, data aggregation processing is performed by a distributed database system. In this way, both data storage and data aggregation processing are completed by a distributed database, and no additional processing system needs to be set up to perform data aggregation processing. Therefore, data does not need to be replicated and separately sent to the distributed database system and the additionally set up processing system. In this manner, occupation of transmission resources can be reduced.

The receiving module 910, the obtaining module 920, the determining module 930, the distribution module 940, and the marking module 950 may all be implemented by software, or may be implemented by hardware. For example, the following uses the receiving module 910 as an example to describe an implementation of the receiving module 910. Similarly, for implementations of the obtaining module 920, the determining module 930, the distribution module 940, and the marking module 950, refer to the implementation of the receiving module 910.

A module is used as an example of a software functional unit, and the receiving module 910 may include code run on a computing instance. The computing instance may include at least one of a physical host (a compute device), a virtual machine, and a container. Further, there may be one or more computing instances. For example, the receiving module 910 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

The module is used as an example of a hardware functional unit, and the receiving module 910 may include at least one compute device, for example, a server. Alternatively, the receiving module 910 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of compute devices included in the receiving module 910 may be distributed in a same region, or may be distributed in different regions. The plurality of compute devices included in the receiving module 910 may be distributed in a same AZ, or may be distributed in different AZs. Similarly, the plurality of compute devices included in the receiving module 910 may be distributed on a same VPC, or may be distributed on a plurality of VPCs. The plurality of compute devices may be any combination of compute devices such as the server, the ASIC, the PLD, the CPLD, the FPGA, and the GAL.

It should be noted that, in another embodiment, the receiving module 910, the obtaining module 920, the determining module 930, the distribution module 940, and the marking module 950 may be configured to perform any step in a data aggregation processing method of a compute node, and steps that the receiving module 910, the obtaining module 920, the determining module 930, the distribution module 940, and the marking module 950 are responsible for implementing may be specified based on a requirement. The receiving module 910, the obtaining module 920, the determining module 930, the distribution module 940, and the marking module 950 separately implement different steps in the data aggregation processing method, to implement all functions of the apparatus of the compute node for performing data aggregation processing.

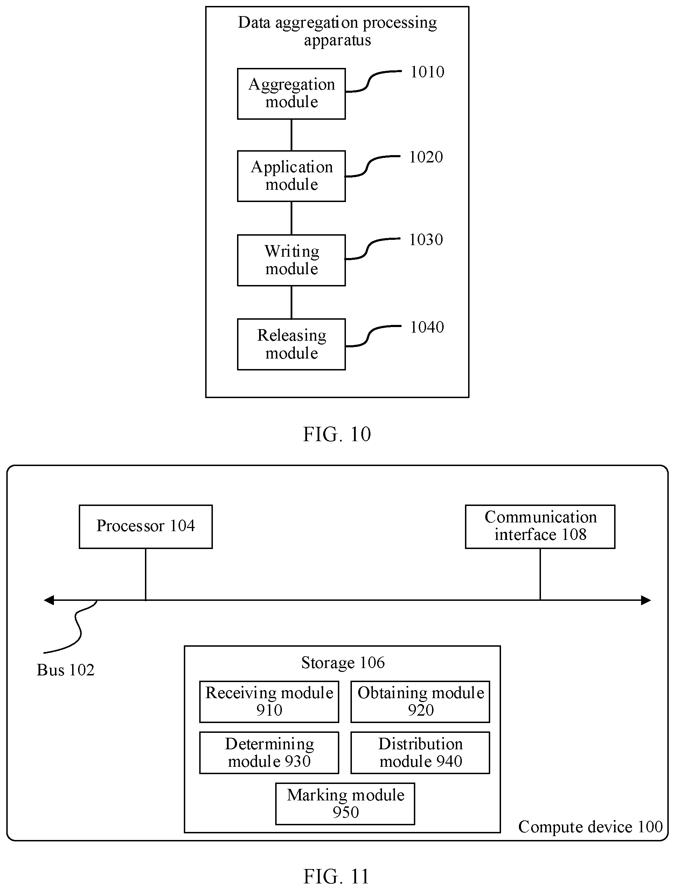

Based on a same technical concept, an embodiment of this disclosure provides a data aggregation processing apparatus. The apparatus may be used in the foregoing storage node. As shown in FIG. 10, the apparatus includes an aggregation module 1010, configured to perform aggregation processing based on a received data unit. The aggregation module 1010 may specifically implement processing functions of steps 205, 506, and 705 and other implicit steps.

In a possible implementation, the apparatus further includes an application module 1020, configured to: apply to a first buffer pool for a first temporary buffer, and write the received data unit into the first temporary buffer. Specifically, the application module 1020 may implement a processing function of step 205 and other implicit steps.

The apparatus further includes a writing module 1030, configured to write the data unit in the first temporary buffer into a storage disk. The writing module 1030 may specifically implement the processing function of step 205 and other implicit steps.

The apparatus further includes a releasing module 1040, configured to: apply to a second buffer pool for a second temporary buffer that has a same space size as the first temporary buffer, and release the second temporary buffer to the first buffer pool. The releasing module 1040 may specifically implement the processing function of step 205 and other implicit steps.

The aggregation module 1010 is configured to perform aggregation processing based on the data unit in the first temporary buffer, and may specifically implement the processing function of step 205 and other implicit steps.

The releasing module 1040 is further configured to release the first temporary buffer to the second buffer pool. The releasing module 1040 may specifically implement the processing function of step 205 and other implicit steps.

In this embodiment of this disclosure, data aggregation processing is performed by a distributed database system. In this way, both data storage and data aggregation processing are completed by a distributed database, and no additional processing system needs to be set up to perform data aggregation processing. Therefore, data does not need to be replicated and separately sent to the distributed database system and the additionally set up processing system. In this manner, occupation of transmission resources can be reduced.

The aggregation module 1010, the application module 1020, the writing module 1030, and the releasing module 1040 may all be implemented by software, or may be implemented by hardware. For example, the following uses the aggregation module 1010 as an example to describe an implementation of the aggregation module 1010. Similarly, for implementations of the application module 1020, the writing module 1030, and the releasing module 1040, refer to the implementation of the aggregation module 1010.

A module is used as an example of a software functional unit, and the aggregation module 1010 may include code run on a computing instance. The computing instance may include at least one of a physical host (a compute device), a virtual machine, and a container. Further, there may be one or more computing instances. For example, the aggregation module 1010 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

The module is used as an example of a hardware functional unit, and the aggregation module 1010 may include at least one compute device, for example, a server. Alternatively, the aggregation module 1010 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

A plurality of compute devices included in the aggregation module 1010 may be distributed in a same region, or may be distributed in different regions. The plurality of compute devices included in the aggregation module 1010 may be distributed in a same AZ, or may be distributed in different AZs. Similarly, the plurality of compute devices included in the aggregation module 1010 may be distributed on a same VPC, or may be distributed on a plurality of VPCs. The plurality of compute devices may be any combination of compute devices such as the server, the ASIC, the PLD, the CPLD, the FPGA, and the GAL.

It should be noted that, in another embodiment, the aggregation module 1010, the application module 1020, the writing module 1030, and the releasing module 1040 may be configured to perform any step in a data aggregation processing method of a compute node, and steps that the aggregation module 1010, the application module 1020, the writing module 1030, and the releasing module 1040 are responsible for implementing may be specified based on a requirement. The aggregation module 1010, the application module 1020, the writing module 1030, and the releasing module 1040 separately implement different steps in the data aggregation processing method, to implement all functions of the apparatus of the compute node for performing data aggregation processing.

This disclosure further provides a distributed database system. As shown in FIG. 1, the distributed database system includes a coordinator node, a plurality of storage nodes, and a storage disk. Functions of the coordinator node, the storage node, and the storage disk have been described, and details are not described herein again.

The coordinator node, the storage node, and the storage disk may all be implemented by software, or may be implemented by hardware. For example, the following describes an implementation of the coordinator node. Similarly, for implementations of the storage node and the storage disk, refer to the implementation of the coordinator node.

A module is used as an example of a software functional unit, and the coordinator node may include code run on a computing instance. The computing instance may be at least one of compute devices such as a physical host (a compute device), a virtual machine, and a container. Further, there may be one or more compute devices. For example, an apparatus for performing data aggregation processing may include code run on a plurality of hosts/virtual machines/containers. It should be noted that the plurality of hosts/virtual machines/containers configured to run the application may be distributed in a same region, or may be distributed in different regions. The plurality of hosts/virtual machines/containers configured to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same VPC, or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

The module is used as an example of a hardware functional unit, and the coordinator node may include at least one compute device, for example, a server. Alternatively, the apparatus for performing aggregation processing on data may be a device implemented by an ASIC or a PLD, or the like. The PLD may be implemented by a CPLD, an FPGA, GAL, or any combination thereof.

A plurality of compute devices included in the coordinator node may be distributed in a same region, or may be distributed in different regions. The plurality of compute devices included in the coordinator node may be distributed in a same AZ, or may be distributed in different AZs. Similarly, the plurality of compute devices included in the coordinator node may be distributed on a same VPC, or may be distributed on a plurality of VPCs. The plurality of compute devices may be any combination of compute devices such as the server, the ASIC, the PLD, the CPLD, the FPGA, and the GAL.

This disclosure further provides a compute device 100. The compute device 100 may be used in the foregoing coordinator node or storage node. As shown in FIG. 11, the compute device 100 includes a bus 102, a processor 104, a storage 106, and a communication interface 108. The processor 104, the storage 106, and the communication interface 108 communicate with each other through the bus 102. The compute device 100 may be a server or a terminal device. It should be understood that quantities of processors and storages in the compute device 100 are not limited in this disclosure.

The bus 102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 8, but it does not indicate that there is only one bus or only one type of bus. The bus 102 may include a path for transmitting information between the components (for example, the storage 106, the processor 104, and the communication interface 108) of the compute device 100.

The processor 104 may include any one or more of processors such as a central processing unit (central processing unit, CPU), a graphics processing unit (graphics processing unit, GPU), a microprocessor (microprocessor, MP), and a digital signal processor (digital signal processor, DSP).

The storage 106 may include a volatile memory (volatile memory), for example, a random access memory (random access memory, RAM). The storage 106 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 106 stores executable program code. The processor 104 executes the executable program code to separately implement functions of the receiving module 910, the obtaining module 920, the determining module 930, the distribution module 940, the marking module 950, the aggregation module 1010, the application module 1020, the writing module 1030, and the releasing module 1040, to implement a data aggregation processing method. That is, the storage 106 stores instructions of the data aggregation processing method.

Alternatively, the storage 106 stores executable code. The processor 104 executes the executable code to separately implement functions of the receiving module 910, the obtaining module 920, the determining module 930, the distribution module 940, the marking module 950, the aggregation module 1010, the application module 1020, the writing module 1030, and the releasing module 1040, to implement a data aggregation processing method. That is, the storage 106 stores instructions of the data aggregation processing method.

The communication interface 108 implements communication between the compute device 100 and another device or a communication network by using a transceiver module, for example, but not limited to a network interface card or a transceiver.

An embodiment of this disclosure further provides a computing device cluster. The computing device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

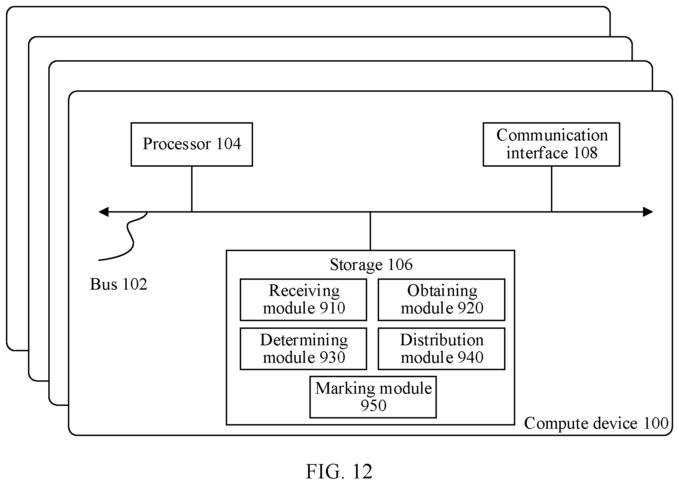

As shown in FIG. 12, the computing device cluster includes at least one compute device 100. A storage 106 in one or more compute devices 100 in the computing device cluster may store same instructions used for a data aggregation processing method.

In some possible implementations, the storage 106 in the one or more compute devices 100 in the computing device cluster may alternatively separately store a part of instructions used for the data aggregation processing method. In other words, a combination of one or more compute devices 100 may jointly execute the instructions used for the data aggregation processing method.

It should be noted that storages 106 in different compute devices 100 in the computing device cluster may store different instructions, which are respectively used for a part of functions of a data aggregation processing apparatus. In other words, the instructions stored in the storages 106 in different compute devices 100 may be used to implement a function of one or more of the receiving module 910, the obtaining module 920, the determining module 930, the distribution module 940, the marking module 950, the aggregation module 1010, the application module 1020, the writing module 1030, and the releasing module 1040.

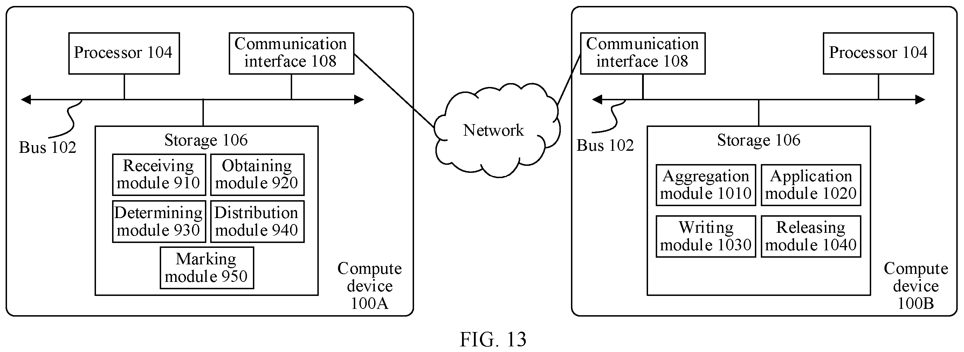

In some possible implementations, the one or more compute devices in the computing device cluster may be connected through a network. The network may be a wide area network, a local area network, or the like, and the network may be a transmission control protocol (Transmission Control Protocol, TCP) network, a remote direct memory access (Remote Direct Memory Access, RDMA) network, or the like. FIG. 13 shows a possible implementation. As shown in FIG. 13, two compute devices 100A and 100B are connected through a network. Specifically, each compute device is connected to the network through a communication interface in the compute device. In this possible implementation, a storage 106 in the compute device 100A stores instructions for performing functions of the receiving module 910, the obtaining module 920, the determining module 930, the distribution module 940, and the marking module 950. In addition, a storage 106 in the compute device 100B stores instructions for performing functions of the aggregation module 1010, the application module 1020, the writing module 1030, and the releasing module 1040.

A connection manner between computing device clusters shown in FIG. 13 may be that, considering that a large amount of data needs to be stored in the data aggregation processing method provided in this disclosure, it is considered that the functions implemented by the aggregation module 1010, the application module 1020, the writing module 1030, and the releasing module 1040 are performed by the compute device 100B.

It should be understood that a function of the compute device 100A shown in FIG. 13 may alternatively be implemented by a plurality of compute devices 100. Similarly, a function of the compute device 100B may alternatively be implemented by a plurality of compute devices 100.

An embodiment of this disclosure further provides another computing device cluster. For a connection relationship between compute devices in the computing device cluster, refer to the connection manner of the computing device cluster in FIG. 12 and FIG. 13. A difference lies in that a storage 106 in one or more compute devices 100 in the computing device cluster may store same instructions used for a data aggregation processing method.

In some possible implementations, the storage 106 in the one or more compute devices 100 in the computing device cluster may alternatively separately store a part of instructions used for the data aggregation processing method. In other words, a combination of one or more compute devices 100 may jointly execute the instructions used for the data aggregation processing method.

An embodiment of this disclosure further provides a computer program product including instructions. The computer program product may be software or a program product that includes instructions and that can run on a compute device or can be stored in any usable medium. When the computer program product runs on at least one compute device, the at least one compute device is caused to perform a data aggregation processing method.

An embodiment of this disclosure further provides a computer-readable storage medium. The computer-readable storage medium may be any usable medium that can be stored in a compute device, or a data storage device like a data center, including one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive), or the like. The computer-readable storage medium includes instructions. The instructions indicate a data aggregation processing method of the compute device, or instructs the compute device to perform a data aggregation processing method.

Finally, it should be noted that the foregoing embodiments are merely intended to describe the technical solutions of this disclosure, rather than to limit this disclosure. Although this disclosure is described in detail with reference to the foregoing embodiments, a person of ordinary skill in the art should understand that modifications to the technical solutions described in the foregoing embodiments or equivalent replacements to a part of technical features thereof may still be made without departing from the protection scope of the technical solutions of embodiments of this disclosure.

## Claims

1. A data aggregation processing method, wherein the method is applied to a distributed database system, the distributed database system comprises a coordinator node and a plurality of storage nodes, and the method comprises:
receiving, by the coordinator node, an aggregation instruction for an original data table;
obtaining, by the coordinator node, a first shard key of an aggregated data table corresponding to the original data table, wherein the aggregated data table is used to record data obtained by performing aggregation processing on data in the original data table, and the first shard key comprises at least one first attribute tag of the aggregated data table;
determining, by the coordinator node, first allocation information, wherein the first allocation information indicates storage nodes respectively allocated to a plurality of first attribute value sets corresponding to the first shard key, and the first attribute value set is composed of one attribute value of each first attribute tag;
comparing, by the coordinator node, the first attribute value set in the first allocation information with an attribute value in a data unit corresponding to the original data table, to distribute the data unit corresponding to the original data table to a corresponding storage node; and
performing, by the storage node, aggregation processing based on the received data unit.

2. The method according to claim 1, wherein the first shard key is the same as a second shard key of the original data table, and the second shard key comprises at least one second attribute tag of the original data table; and
the determining, by the coordinator node, the first allocation information comprises:
determining, by the coordinator node, the first allocation information based on second allocation information of the original data table, wherein the second allocation information indicates storage nodes respectively allocated to a plurality of second attribute value sets corresponding to the second shard key, the storage node indicated by the second allocation information is configured to perform disk flushing processing, the second attribute value set is composed of one attribute value of each second attribute tag, and in the first allocation information and the second allocation information, storage nodes corresponding to a same attribute value set are the same.

3. The method according to claim 1, wherein the first shard key is different from a second shard key and is a subset of the second shard key, and the second shard key comprises at least one second attribute tag of the original data table; and
the determining, by the coordinator node, the first allocation information comprises:
determining, by the coordinator node, the plurality of first attribute value sets corresponding to the first shard key and a plurality of second attribute value sets corresponding to the second shard key, wherein the second attribute value set is composed of one attribute value of each second attribute tag; and
determining, by the coordinator node, the first allocation information based on the plurality of first attribute value sets and the plurality of second attribute value sets.

4. The method according to claim 3, wherein the determining, by the coordinator node, the first allocation information based on the plurality of first attribute value sets and the plurality of second attribute value sets comprises:
for each first attribute value set, determining, by the coordinator node, at least one second attribute value set comprising the first attribute value set, and selecting, from storage nodes corresponding to the at least one second attribute value set, one storage node as a storage node corresponding to the first attribute value set; and
determining, by the coordinator node, the first allocation information based on the storage node corresponding to each first attribute value set.

5. The method according to claim 1, wherein the determining, by the coordinator node, the first allocation information comprises:
determining, by the coordinator node, the first allocation information according to a storage node selection rule, wherein the storage node selection rule comprises random selection, selection in a specified order, or selection based on resource occupancy.

6. The method according to claim 5, wherein the first shard key is different from a second shard key and is not a subset of the second shard key, and the second shard key comprises at least one second attribute tag of the original data table.

7. The method according to any one of claims 1 to 6, wherein the first shard key is determined according to the aggregation instruction.

8. The method according to any one of claims 1 to 7, wherein the comparing, by the coordinator node, the first attribute value set in the first allocation information with the attribute value in the data unit corresponding to the original data table, to distribute the data unit corresponding to the original data table to the corresponding storage node comprises:
separately comparing, by the coordinator node, the first attribute value set in the first allocation information and the second attribute value set in the second allocation information with the attribute value in the data unit corresponding to the original data table, to add an aggregation mark and/or a write mark to the data unit corresponding to the original data table, and distribute the data unit to the corresponding storage node, wherein the second allocation information indicates the storage nodes respectively allocated to the plurality of second attribute value sets corresponding to the second shard key, the storage node indicated by the second allocation information is configured to perform disk flushing processing, the second shard key comprises the at least one second attribute tag of the original data table, the second attribute value set is composed of one attribute value of each second attribute tag, the aggregation mark indicates the storage node to perform aggregation processing on the data unit, and the write mark indicates the storage node to perform disk flushing processing on the data unit.

9. The method according to claim 8, wherein the separately comparing, by the coordinator node, the first attribute value set in the first allocation information and the second attribute value set in the second allocation information with the attribute value in the data unit corresponding to the original data table, to add the aggregation mark and/or the write mark to the data unit corresponding to the original data table, and distribute the data unit to the corresponding storage node comprises:
determining, by the coordinator node in the first allocation information, a first attribute value set that matches an attribute value of a received first data unit of the original data table and a corresponding first storage node, and determining, in the second allocation information, a second attribute value set that matches the attribute value of the received first data unit of the original data table and a corresponding second storage node; and
when the first storage node and the second storage node are a same storage node, adding, by the coordinator node, the aggregation mark and the write mark to the first data unit, and sending the first data unit to the first storage node; or
when the first storage node and the second storage node are not a same storage node, replicating, by the coordinator node, the first data unit to obtain a second data unit, performing aggregation processing on the first data unit and another data unit that matches the first attribute value set, adding the aggregation mark to a data unit obtained through the aggregation processing and sending the data unit to the first storage node, and adding the write mark to the second data unit and sending the second data unit to the second storage node.

10. The method according to claim 8, wherein the separately comparing, by the coordinator node, the first attribute value set in the first allocation information and the second attribute value set in the second allocation information with the attribute value in the data unit corresponding to the original data table, to add the aggregation mark and/or the write mark to the data unit corresponding to the original data table, and distribute the data unit to the corresponding storage node comprises:
determining, by the coordinator node in the first allocation information, a first attribute value set that matches an attribute value of a received first data unit of the original data table and a corresponding first storage node, and determining, in the second allocation information, a second attribute value set that matches the attribute value of the received first data unit of the original data table and a corresponding second storage node; and
when the first storage node and the second storage node are a same storage node, adding, by the coordinator node, the aggregation mark and the write mark to the first data unit, and sending the first data unit to the first storage node; or
when the first storage node and the second storage node are not a same storage node, replicating, by the coordinator node, the first data unit to obtain a second data unit, adding the aggregation mark to the first data unit and sending the first data unit to the first storage node, and adding the write mark to the second data unit and sending the second data unit to the second storage node.

11. The method according to any one of claims 1 to 10, wherein the performing, by the storage node, aggregation processing based on the received data unit comprises:
applying, by the storage node, to a first buffer pool for a first temporary buffer, and writing the received data unit into the first temporary buffer;
writing, by the storage node, the data unit in the first temporary buffer into the storage disk;
applying, by the storage node, to a second buffer pool for a second temporary buffer that has a same space size as the first temporary buffer, and releasing the second temporary buffer to the first buffer pool;
performing, by the storage node, aggregation processing based on the data unit in the first temporary buffer; and
releasing, by the storage node, the first temporary buffer to the second buffer pool.

12. A distributed database system, wherein the distributed database system comprises a coordinator node and a plurality of storage nodes;
the coordinator node is configured to:
receive an aggregation instruction for an original data table; obtain a first shard key of an aggregated data table corresponding to the original data table, wherein the aggregated data table is used to record data obtained by performing aggregation processing on data in the original data table, and the first shard key comprises at least one first attribute tag of the aggregated data table; determine first allocation information, wherein the first allocation information indicates storage nodes respectively allocated to a plurality of first attribute value sets corresponding to the first shard key, and the first attribute value set comprises an attribute value of each first attribute tag; and compare the first attribute value set in the first allocation information with an attribute value in a data unit corresponding to the original data table, to distribute the data unit corresponding to the original data table to a corresponding storage node; and
the storage node is configured to perform aggregation processing based on the received data unit.

13. The distributed database system according to claim 12, wherein the first shard key is the same as a second shard key of the original data table, and the second shard key comprises at least one second attribute tag of the original data table; and
the coordinator node is configured to:
determine the first allocation information based on second allocation information of the original data table, wherein the second allocation information indicates storage nodes respectively allocated to a plurality of second attribute value sets corresponding to the second shard key, the storage node indicated by the second allocation information is configured to perform disk flushing processing, the second attribute value set is composed of one attribute value of each second attribute tag, and in the first allocation information and the second allocation information, storage nodes corresponding to a same attribute value set are the same.

14. The distributed database system according to claim 12, wherein the first shard key is different from a second shard key and is a subset of the second shard key, and the second shard key comprises at least one second attribute tag of the original data table; and
the coordinator node is configured to:
determine the plurality of first attribute value sets corresponding to the first shard key and a plurality of second attribute value sets corresponding to the second shard key, wherein the second attribute value set is composed of one attribute value of each second attribute tag; and
determine the first allocation information based on the plurality of first attribute value sets and the plurality of second attribute value sets.

15. The distributed database system according to claim 14, wherein the coordinator node is configured to:
for each first attribute value set, determine at least one second attribute value set comprising the first attribute value set, and select, from storage nodes corresponding to the at least one second attribute value set, one storage node as a storage node corresponding to the first attribute value set; and
determine the first allocation information based on the storage node corresponding to each first attribute value set.

16. The distributed database system according to claim 12, wherein the coordinator node is configured to:
determine the first allocation information according to a storage node selection rule, wherein the storage node selection rule comprises random selection, selection in a specified order, or selection based on resource occupancy.

17. The distributed database system according to claim 16, wherein the first shard key is different from a second shard key and is not a subset of the second shard key, and the second shard key comprises at least one second attribute tag of the original data table.

18. The distributed database system according to any one of claims 12 to 17, wherein the first shard key is determined according to the aggregation instruction.

19. The distributed database system according to any one of claims 12 to 18, wherein the coordinator node is configured to:
separately compare the first attribute value set in the first allocation information and the second attribute value set in the second allocation information with the attribute value in the data unit corresponding to the original data table, to add an aggregation mark and/or a write mark to the data unit corresponding to the original data table, and distribute the data unit to the corresponding storage node, wherein the second allocation information indicates the storage nodes respectively allocated to the plurality of second attribute value sets corresponding to the second shard key, the storage node indicated by the second allocation information is configured to perform disk flushing processing, the second shard key comprises the at least one second attribute tag of the original data table, the second attribute value set is composed of one attribute value of each second attribute tag, the aggregation mark indicates the storage node to perform aggregation processing on the data unit, and the write mark indicates the storage node to perform disk flushing processing on the data unit.

20. The distributed database system according to claim 19, wherein the coordinator node is configured to:
determine, in the first allocation information, a first attribute value set that matches an attribute value of a received first data unit of the original data table and a corresponding first storage node, and determine, in the second allocation information, a second attribute value set that matches the attribute value of the received first data unit of the original data table and a corresponding second storage node; and
when the first storage node and the second storage node are a same storage node, add the aggregation mark and the write mark to the first data unit, and send the first data unit to the first storage node; or
when the first storage node and the second storage node are not a same storage node, replicate the first data unit to obtain a second data unit, perform aggregation processing on the first data unit and another data unit that matches the first attribute value set, add the aggregation mark to a data unit obtained through the aggregation processing and send the data unit to the first storage node, and add the write mark to the second data unit and send the second data unit to the second storage node.

21. The distributed database system according to claim 19, wherein the coordinator node is configured to:
determine, in the first allocation information, a first attribute value set that matches an attribute value of a received first data unit of the original data table and a corresponding first storage node, and determine, in the second allocation information, a second attribute value set that matches the attribute value of the received first data unit of the original data table and a corresponding second storage node; and
when the first storage node and the second storage node are a same storage node, add the aggregation mark and the write mark to the first data unit, and send the first data unit to the first storage node; or
when the first storage node and the second storage node are not a same storage node, replicate the first data unit to obtain a second data unit, add the aggregation mark to the first data unit and send the first data unit to the first storage node, and add the write mark to the second data unit and send the second data unit to the second storage node.

22. The distributed database system according to any one of claims 12 to 21, wherein the storage node is configured to:
apply to a first buffer pool for a first temporary buffer, and write the received data unit into the first temporary buffer;
write the data unit in the first temporary buffer into the storage disk;
apply to a second buffer pool for a second temporary buffer that has a same space size as the first temporary buffer, and release the second temporary buffer to the first buffer pool;
perform aggregation processing based on the data unit in the first temporary buffer; and
release the first temporary buffer to the second buffer pool.

23. A computing device cluster, comprising at least one compute device, wherein each compute device comprises a processor and a storage; and
the processor of the at least one compute device is configured to execute instructions stored in the storage of the at least one compute device, to cause the computing device cluster to perform the method according to any one of claims 1 to 11.

24. A computer-readable storage medium, comprising computer program instructions, wherein when the computer program instructions are executed by a computing device cluster, the computing device cluster performs the method according to any one of claims 1 to 11.

25. A computer program product comprising instructions, wherein when the instructions are run by a computing device cluster, the computing device cluster is caused to perform the method according to any one of claims 1 to 11.
